# EUROPÄISCHE PATENTANMELDUNG

(11) **EP 4 756 242 A1**
(43) Veröffentlichungstag der Anmeldung: **10.06.2026**
(21) Anmeldenummer: 24217509.9
(22) Anmeldetag: 04.12.2024
(51) Int. Cl.: F16B 33/00, F16B 35/04

(54) **SCHRAUBELEMENT MIT ABSTANDSGEOMETRIE**

(71) Anmelder: ABC Umformtechnik GmbH & Co. KG, 58285 Gevelsberg (DE)
(72) Erfinder: Koch, Daniel, 58285 Gevelsberg (DE); Lange, Andreas, 58285 Gevelsberg (DE); Köhler, Lennart, 58285 Gevelsberg (DE)
(74) Vertreter: Kaldewey, Tim Merlin

(57) **Zusammenfassung**

Die Erfindung betrifft ein Schraubenelement (1) mit vormontierter Scheibe (8) sowie ein Verfahren zum Beschichten und Herstellen des Schraubenelements (1). Die Scheibe (8) wird durch eine Abstandsgeometrie und einem entsprechenden Gewinde (5) in einem dazwischen ausgebildeten Abstandsbereich (7) vorteilhaft positioniert und gehalten.

## Beschreibung

Die vorliegende Erfindung betrifft ein Schraubenelement mit vormontierter Scheibe sowie ein Verfahren zum Beschichten und Herstellen des Schraubenelements.

Schraubenelemente werden häufig mit vormontierten Scheiben bereitgestellt. Entsprechende Schraubenelemente sind beispielsweise aus der DE102021105698A1 oder der DE102019209510A2 bekannt. Dabei werden solche Kombinationsschrauben insbesondere zum Vorspannen von Werkstücken verwendet, beispielsweise in der Automobilindustrie. Dabei gibt es hohe Ansprüche an die Schraubenelemente, insbesondere hinsichtlich deren Verarbeitung und Maßtoleranzen. Auch weitere technische Eigenschaften wie zum Beispiel die Einschraubwerte oder der Korrosionsschutz sind für eine fehlerhaftes Schraubenelement essenziell.

Häufig müssen die Schrauben und die Scheibe für notwendige Eigenschaften beschichtet werden, um für den jeweiligen Einsatz geeignet zu sein. Insbesondere bei Schraubenelementen mit vormontierten Scheiben ist eine ganzeinheitliche Beschichtung häufig kompliziert und aufwendig. Dabei werden die Schrauben und die Scheiben häufig aufwendig getrennt voneinander beschichtet und dann montiert, um ein Verkleben bei der Beschichtung zu verhindern. Durch diese nachträgliche Montage wird die Schraubenherstellung komplizierter und die Verarbeitung hinsichtlich der Bearbeitungsschritte eingeschränkt.

Auch der Einsatz von nicht in Umfangsrichtung geschlossenen Scheiben, welche nachträglich auf eine fertig gewalzte Schraube aufgebracht werden ist von Nachteil, da diese häufig nicht den technischen Anforderungen entsprechen und ein zusätzlicher Arbeitsschritt erfolgt. Daher werden Scheiben, also geschlossene und in Umfangsrichtung durchgehende Scheiben, bevorzugt.

Aus den vorgenannten Nachteilen ergibt sich, dass die Schrauben zusammen mit der auf dem Schraubenschaft angeordneten Scheiben beschichtet werden müssen, auch um eine wirtschaftliche Herstellung beziehungsweise Beschichtung ohne weitere Schritte zu ermöglichen. Dabei verkleben die Schraube und die Scheibe oftmals bei der Beschichtung und es treten ungewünschte technische Eigenschaften in Bezug auf Reibwerte, elektrische Leitfähigkeit und Korrosionsschutz auf. Dabei kann beispielsweise die Scheibe an dem Schraubenkopf, an dem Gewindeansatz oder sonstigen Abschnitten unvorteilhaft mit dem Schraubenkörper verkleben oder zumindest teilweise an dieser haften. Dadurch kommt es beim Anziehen zu ungewollter Streuung der Reibwerte. Zudem können kritische Abschnitte nur unzureichend oder nicht beschichtet werden, was wiederum den Korrosionsschutz negativ beeinflusst beziehungsweise reduziert.

Insoweit werden fehlerhafte Schraubenelemente mit unzureichender Beschichtung an Schraube oder Scheibe hervorgerufen. Schraubenelemente mit einer verklebten Scheibe können beispielsweise nicht für die Montage, insbesondere an anspruchsvollen Werkstücken, verwendet werden. Selbst wenn die Verklebung sich nach dem Beschichten löst, werden Abschnitte nicht vollständig oder unzureichend verarbeitet, da die Scheibe an ungewünschten Stellen eine Beschichtung an dem Schraubenkörper verhindert oder selbst unzureichend beschichtet wird.

Der für Korrosion anfällige und nach der Montage außen am Werkstück angeordnete Schraubenkopf sollte dabei besonders gleichmäßig und ausreichend beschichtet sein. Insbesondere gilt es daher bei der Beschichtung ein Verkleben der Scheibe am Schraubenkopf zu verhindern, welche sich nachteilig bei der Beschichtung an diesem anlegen beziehungsweise haften kann. Zudem ist ein Anhaften an ungewünschten Positionen der Scheibe am Schraubenschaft ebenfalls möglich.

Um diese Nachteile bei der Beschichtung eines Schraubenelements mit vormontierter Scheibe zu verhindern, werden häufig aufwendig Abstandshalter vor der Beschichtung montiert, welche die Schraube an einer bestimmten Position für die Beschichtung halten, insbesondere in einem Abstand zum Schraubenkopf und der entsprechenden Anlegefläche am Schraubenkopf für die Montage. Diese Abstandshalter können bei der Beschichtung von dem Schraubenelement getrennt werden. Dies gilt insbesondere bei Beschichtungsverfahren mit hoher mechanischer Belastung, wie zum Beispiel bei einem Trommelbeschichtungsverfahren. Ferner müssen die Abstandshalter aufwendig in einem zusätzlichen Arbeitsschritt nach der Beschichtung oder vor der Montage wieder entfernt werden.

Eine Alternative bei der ganzeinheitlichen Beschichtung von Schraubenelementen mit vormontierten Schrauben besteht durch die Bereitstellung in einem Gestell. Dabei werden die Schraubenelemente zusammen mit der Scheibe in einem Gestell aufgehängt oder entsprechend aufgesteckt, so dass die Scheibe vom Schraubenkopf bei der Beschichtung beabstandet gehalten wird. Dabei ist auch dieses Verfahren aufwendig und teuer. Zudem müssen die beschichteten Schrauben aufwendig aus dem Gestell genommen werden. Ferner können ungewünscht Teile des Gestells ebenfalls mit der Beschichtung versehen werden und eine zusätzliche Reinigung der Gestelle ist notwendig.

Es ist daher die Aufgabe der Erfindung, die im Stand der Technik aufgeführten Nachteile zumindest zum Teil zu beseitigen, insbesondere vollständig zu beseitigen. Ferner ist es eine Aufgabe der vorliegenden Erfindung ein verbessertes Verfahren zur Beschichtung und Herstellung eines Schraubenelementes aufzuzeigen. Insbesondere ist es eine Aufgabe der Erfindung ein verbessertes Schraubenelement mit vormontierter Scheibe mit gewünschten technischen Eigenschaften bereitzustellen. Ferner ist es eine Aufgabe der vorliegenden Erfindung ein Schraubenelement bereitzustellen, dass wirtschaftlich und einfach zusammen mit der Scheibe gleichmäßig beschichtet werden kann. Ferner ist es eine Aufgabe der vorliegenden Erfindung ein Schraubenelement bereitzustellen, dass insbesondere im Bereich des Schraubenkopfes gleichmäßig und ausreichend beschichtet werden kann beziehungsweise beschichtet ist.

Die vorliegende Aufgabe wird mit den Merkmalen der nebengeordneten Ansprüche gelöst. Vorteilhafte Weiterbildungen der Erfindung sind in den Unteransprüchen angegeben. In den Rahmen der Erfindung fallen auch sämtliche Kombinationen aus zumindest zwei in der Beschreibung, in den Ansprüchen und/oder den Zeichnungen angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Demnach betrifft die Erfindung ein Schraubenelement zumindest aufweisend i) einen Schraubenschaft mit einem Schraubenkopf, ii) einen vom Schraubenkopf beabstandeten Abstandsvorsprung mit einem Durchmesser am Schraubenschaft, und iii) ein Gewinde mit einem Außendurchmesser an einer dem Schraubenkopf abgewandten Seite des Abstandsvorsprungs, und iv) eine auf dem Schraubenschaft vormontierte und zwischen dem Abstandsvorsprung und dem Gewinde angeordnete Scheibe mit einem Scheibeninnendurchmesser, wobei der Scheibeninnendurchmesser der Scheibe kleiner ist als der Durchmesser des Abstandsvorsprungs und kleiner ist als der Außendurchmessers des Gewindes, so dass die Scheibe zwischen dem Abstandsvorsprung und dem Gewinde in einem Abstandsbereich entlang des Schraubenschafts verliersicher in einem Abstand zum Schraubenkopf angeordnet ist.

In anderen Worten sind der Durchmesser des Abstandsvorsprungs und der Außendurchmesser des Gewindes jeweils größer als der Innendurchmesser der Scheibe, so dass die Scheibe zwischen dem Abstandsvorsprung und dem Gewinde in dem Abstandsbereich beziehungsweise in einer Beschichtungsposition vormontiert gehalten wird. Der Scheibeninnendurchmesser ist dabei insbesondere so gewählt, dass die Scheibe innerhalb des Abstandsbereichs zwischen dem Gewinde und einer Abstandsvorsprungunterseite am Schaft entlang bewegt werden kann. Ferner kann bei der Montage die Scheibe bei einer vorteilhaft vorgebbaren Kraft über den Anlegevorsprung gedrückt werden, so dass die Scheibe gegen den Schraubenkopf beziehungsweise eine Anlegefläche des Schraubenkopfes am Ende des Schafts gedrückt werden kann.

Der Abstandsvorsprung kann sich über den gesamten Umfang erstrecken oder nur Abschnittsweise ausgebildet sein. Bei einer Beschichtung des Schraubenelements kann vorteilhaft die Position der Scheibe am Schraubenschaft nach oben durch den Abstandsvorsprung vorgegeben beziehungsweise begrenzt werden. Nach unten in Richtung einer Schraubenspitze beziehungsweise eines Schraubenendes wird die Position der Scheibe durch das Gewinde begrenzt, welches ein Abrutschen der Scheibe vom Schaft verhindert.

Auf diese Weise kann vorteilhaft eine obere und untere Grenze der Scheibe am Schraubenschaft für die Beschichtung vorgegeben werden. Ein einfaches und kostengünstiges Beschichten des Schraubenelements ist somit vorteilhaft möglich. Dabei wird die Scheibe in einer vorteilhaften Position für die Beschichtung gehalten, so dass eine vollständige und ausreichende Beschichtung erfolgen kann. Zudem kann dabei die verliersicher aber am Schaft entlang führbare Scheibe auch innerhalb der Grenzen die Position ändern, so dass der gesamte Abstandsbereich am Schaft beschichtbar ist.

Dadurch ist eine vollständige und gleichmäßige Beschichtung ohne Verkleben mit einfachen und gängigen Beschichtungsverfahren möglich. Zudem wird der Ausschuss bei der Herstellung verringert und ein Schraubenelement mit den gewünschten Eigenschaften hinsichtlich Korrosionsschutz sowie Leitfähigkeit bereitgestellt werden. Zudem ist eine einfache und in Bezug auf die Reibwerte vorteilhaft vorgebbare Montage des beschichteten Schraubenelements möglich.

Der Abstandsvorsprung ist dabei eine Abstandsgeometrie mit beliebiger Form Der Schraubenschaft ist der längliche Teil des Schraubenelements, der den Schraubenkopf und das Gewinde verbindet. Der Schraubenkopf ist der obere Teil des Schraubenelements, der typischerweise zum Anziehen oder Lösen der Schraube verwendet wird. Der Abstandsvorsprung ist eine Verdickung am Schraubenschaft, die vom Schraubenkopf beabstandet ist und einen definierten Durchmesser aufweist. Das Gewinde befindet sich an der dem Schraubenkopf abgewandten Seite des Abstandsvorsprungs und dient zum Einschrauben des Schraubenelements in ein Werkstück. Die Scheibe ist ein ringförmiges Bauteil, das auf dem Schraubenschaft vormontiert ist und zwischen dem Abstandsvorsprung und dem Gewinde angeordnet wird.

Ein weiterer Vorteil des Schraubenelements ist, dass die Scheibe in einer bestimmten Position gehalten wird, um beim Beschichten des Schraubenelements ein Verkleben zu verhindern und das Schraubenelement gleichmäßig zu beschichten. Ein weiterer Vorteil ist, dass die Scheibe verliersicher zwischen dem Abstandsvorsprung und dem Gewinde angeordnet ist, was die Handhabung und Montage des Schraubenelements erleichtert.

In einer bevorzugten Ausführungsform ist vorgesehen, dass durch ein Anziehen des Schraubenelements bei der Montage die Scheibe über den Abstandsvorsprung bewegbar ist und gegen eine Scheibenanlegefläche des Schraubenkopfes anlegbar ist. In anderen Worten wird durch ein Anziehen über den Schraubenkopf ermöglicht, dass die Scheibe über den Abstandsvorsprung geclipst werden und sich dann an den Schraubenkopf anlegen kann. Diese spezifische Ausgestaltung ermöglicht eine gezielte Bewegung der Scheibe entlang des Schraubenschafts, wodurch die Scheibe während des Montageprozesses eine definierte Position einnimmt. Der Abstandsvorsprung am Schraubenschaft dient dabei als Führungselement, welches die Scheibe zunächst in einem vorbestimmten Abstand zum Schraubenkopf hält. Bei der eigentlichen Montage wird die Scheibe dann durch das Anziehen des Schraubenelements bei einer vorteilhaft vorgebaren Anziehkraft über den Abstandsvorsprung hinweg bewegt und legt sich schließlich an die Scheibenanlegefläche des Schraubenkopfes an. Diese Bewegung stellt sicher, dass die Scheibe nach der Montage fest und sicher zwischen dem Schraubenkopf und dem Gewinde positioniert ist. Ein weiterer Vorteil dieser Konstruktion ist, dass die Scheibe durch den kleineren Innendurchmesser im Vergleich zum Durchmesser des Abstandsvorsprungs und des Gewindes verliersicher auf dem Schraubenschaft vormontiert ist. Dies bedeutet, dass die Scheibe nicht unbeabsichtigt vom Schraubenschaft abrutschen kann, was die Handhabung und Lagerung des Schraubenelements vor der eigentlichen Montage erleichtert. Die Möglichkeit, die Scheibe über den Abstandsvorsprung zu bewegen und gegen den Schraubenkopf anzulegen, sorgt zudem dafür, dass die Scheibe nach der Montage eine stabile und feste Position einnimmt, was die Zuverlässigkeit und Festigkeit der gesamten Schraubverbindung erhöht. Diese Ausführungsform bietet somit eine verbesserte Handhabung und Funktionalität des Schraubenelements, indem sie eine präzise Positionierung der Scheibe während des Beschichtungsprozesses und eine sichere Fixierung der Scheibe nach der Montage gewährleistet.

In einer bevorzugten Ausführungsform ist vorgesehen, dass zwischen der Scheibenanlegefläche des Schraubenkopfes und dem Abstandsvorsprung ein den Abstand vorgebender Abschnitt entlang des Schraubenschaftes mit einer Höhe ausgebildet ist, wobei der Abschnitt in axialer Richtung größer ist als eine Scheibenhöhe der Scheibe. Diese spezifische Gestaltung ermöglicht eine präzise Positionierung der Scheibe entlang des Schraubenschaftes, wodurch die Scheibe in einem definierten Abstand zum Schraubenkopf gehalten wird. Der den Abstand vorgebende Abschnitt sorgt dafür, dass die Scheibe während des Beschichtungsprozesses nicht in Kontakt mit dem Schraubenkopf kommt, was ein Verkleben der beiden Komponenten verhindert. Dies ist besonders vorteilhaft, da es die technischen Eigenschaften des Schraubenelements, wie die Reibwerte und die elektrische Leitfähigkeit, konstant hält und den Korrosionsschutz verbessert. Durch die größere axiale Höhe des Abschnitts im Vergleich zur Scheibenhöhe wird sichergestellt, dass die Scheibe auch nach einem Überwinden des Abstandsvorsprungs in dem Abschnitt verbleibt und nur innerhalb des Abschnitts bewegt werden kann. Dabei wird die Scheibe nach der Bewegung über den Abstandsvorsprung nach unten von diesem vorteilhaft in Position gehalten. Dies trägt zur Verliersicherheit der Scheibe bei und stellt sicher, dass sie während der späteren Anwendung des Schraubenelements in der gewünschten Position bleibt. Durch den vorgegebenen Abstand beziehungsweise Höhe des Abschnitts wird eine gleichbleibend hohe Qualität der beschichteten Schraubenelemente gewährleistet.

In einer bevorzugten Ausführungsform ist vorgesehen, dass eine Abstandsbereichshöhe des Abstandsbereichs in axialer Richtung größer, vorzugsweise mindestens 1,2 mal größer, noch bevorzugter mindestens 1,5 mal größer ist als die Scheibenhöhe, so dass die Scheibe in dem Abstandsbereich entlang des Schraubenschafts frei beweglich haltbar ist. Diese spezifische Gestaltung des Abstandsbereichs gewährleistet, dass die Scheibe trotz ihrer Vormontage auf dem Schraubenschaft nicht fest an einer Position fixiert ist, sondern sich innerhalb des definierten Abstandsbereichs frei bewegen kann. Dies ermöglicht eine flexible Anpassung der Scheibenposition während des Beschichtungsprozesses des Schraubenelements, wodurch ein Verkleben der Scheibe mit dem Schraubenschaft oder dem Schraubenkopf vermieden wird. Der Vorteil dieser Konstruktion liegt darin, dass die Scheibe in einer bestimmten Position gehalten wird, um beim Beschichten des Schraubenelements ein Verkleben zu verhindern und das Schraubenelement gleichmäßig zu beschichten.

Durch die größere Abstandsbereichshöhe wird sichergestellt, dass die Scheibe ausreichend Spielraum hat, um nicht durch die Beschichtung beeinträchtigt zu werden, was zu einer gleichmäßigen und qualitativ hochwertigen Beschichtung des gesamten Schraubenelements führt. Zudem wird durch die freie Beweglichkeit der Scheibe innerhalb des Abstandsbereichs eine optimale Positionierung der Scheibe während der Montage und des späteren Einsatzes des Schraubenelements ermöglicht. Dies trägt dazu bei, dass die technischen Eigenschaften des Schraubenelements, wie die Reibwerte und die elektrische Leitfähigkeit, nicht durch eine ungewollte Fixierung der Scheibe beeinträchtigt werden. Die Erfindung adressiert somit gezielt die Problematik der ungewollten Verklebung und der daraus resultierenden technischen Streuungen, die bei herkömmlichen Schraubenelementen auftreten können. Durch die innovative Gestaltung des Abstandsbereichs und die spezifische Dimensionierung in Relation zur Scheibenhöhe wird eine verlässliche und effiziente Lösung für die beschriebene Problematik geboten.

In einer bevorzugten Ausführungsform ist vorgesehen, dass die Höhe mindestens so groß ist wie die Abstandsbereichshöhe. Diese spezifische Konfiguration stellt sicher, dass die Scheibe in beiden Bereichen in gewissem Maße entlang des Schafts bewegbar ist, was entscheidend ist, um ein Verkleben der Scheibe mit dem Schraubenkopf während des Beschichtungsprozesses zu verhindern und die Montage zu erleichtern.

Dabei sind die Höhe des Abschnitts und die Abstandsbereichshöhe beide größer als die Scheibenhöhe in axialer Richtung. Durch diese vorgegebene bewegliche Positionierung der Scheibe in beiden Bereichen wird zudem sichergestellt, dass die Beschichtung gleichmäßig aufgetragen werden kann, ohne dass zusätzliche Abstandshalter oder teure Sonderprozesse erforderlich sind. Dies führt zu einer verbesserten Qualität und Konsistenz der beschichteten Schraubenelemente. Die Höhen des Abschnitts und des Abstandsbereichs sind somit kritische Parameter, die die Funktionalität und Zuverlässigkeit des Schraubenelements während des Beschichtungsprozesses und der Montage sicherstellen. Diese Konstruktion bietet eine kosteneffiziente Lösung für die Herausforderungen bei der Beschichtung von Schraubenelementen mit vormontierten Scheiben und trägt zur Verbesserung der technischen Eigenschaften und der Langlebigkeit der beschichteten Produkte bei.

In einer bevorzugten Ausführungsform ist vorgesehen, dass ein Schraubenelement einen Abstandsbereichsdurchmesser des Abstandsbereichs und einen Abschnittsdurchmesser des Abschnitts aufweist, die gleich groß sind. Diese Ausführungsform betrifft die geometrische Gestaltung des Schraubenelements, insbesondere die Durchmesser der verschiedenen Bereiche des Schraubenschafts. In anderen Worten weist der Schraubenschaft - mit Ausnahme der Verdickung durch den Abstandsvorsprung - vom Schraubenkopf bis zum Gewinde den gleichen Durchmesser auf. Auf diese Weise kann die Schraube einfach mit wenig Produktionsschritten hergestellt werden. Ferner ist die Scheibe im Abstandsbereich sowie dem Abschnitt in gleicher Art bewegbar. Ferner wird durch den gleichen Durchmesser vorteilhaft sichergestellt, dass die Scheibe durch den Schaft bei der Montage von dem Abstandsbereich in den Abschnitt über den Abstandsvorsprung geführt werden kann. Durch die Gleichheit dieser Durchmesser wird eine einheitliche Geometrie des Schraubenschafts erreicht, was mehrere Vorteile mit sich bringt.

Ein Vorteil ist die verbesserte Stabilität und Festigkeit des Schraubenelements, da keine abrupten Durchmesseränderungen auftreten, die potenziell Schwachstellen im Material verursachen könnten. Ein weiterer Vorteil ist die Erleichterung des Herstellungsprozesses, da die gleichmäßige Geometrie eine einfachere und konsistentere Produktion ermöglicht. Dies kann zu einer Reduktion der Produktionskosten und einer Verbesserung der Produktqualität führen. Die gleichmäßige Geometrie erleichtert zudem die Vormontage der Scheibe, da sie ohne großen Kraftaufwand auf den Schraubenschaft aufgeschoben werden kann. Insgesamt bietet diese Ausführungsform eine optimierte Kombination aus mechanischer Stabilität, Produktionsfreundlichkeit und funktionaler Zuverlässigkeit, wodurch die Effizienz und Qualität des Schraubenelements verbessert wird.

In einer anderen bevorzugten Ausführungsform ist der Abschnittsdurchmesser des Abschnitts größer als der Abstandsbereichsdurchmesser des Abstandsbereichs. In anderen Worten ist der Abschnittsdurchmesser leicht größer als der Abstandsbereichsdurchmesser. Auf diese Weise kann das Schraubenelement vorteilhaft die Scheibe mit mehr Spiel im Abstandsbereich halten, so dass vorteilhaft ein fehlerfreies Beschichten ermöglicht wird. Ferner wird durch den leicht größeren Abschnittsdurchmesser die Scheibe bei der Montage besser geführt, so dass ein Verkanten verhindert werden kann.

In einer bevorzugten Ausführungsform ist vorgesehen, dass die Scheibe auf einer Innenseite verjüngend hin zum Abstandsvorsprung ausgebildet ist. In anderen Worten ist der Scheibeninnendurchmesser in Richtung des Schraubenkopfes beziehungsweise in Richtung der Verdickung größer als an einem anderen Ende in Richtung des Gewindes. Der Querschnitt der Scheibe wird somit in Richtung des Abstandsvorsprungs verringert, da der Innendruchmesser der Scheibe erweitert wird. Dabei handelt es sich bevorzugt um eine Fase mit einem Faseninnendurchmesser. Die Fase kann auch über die gesamte Schraubenhöhe ausgebildet sein. Ferner sind mehrere Fasen mit kleiner in Richtung des Abstandsvorsprungs kleiner werdenden Innendurchmessern denkbar.

Diese spezifische Gestaltung der Scheibe ermöglicht eine verbesserte Interaktion zwischen der Scheibe und dem Abstandsvorsprung des Schraubenelements. Die Verjüngung der Innenseite der Scheibe sorgt dafür, dass die Scheibe beim Aufschieben auf den Schraubenschaft leichter über den Abstandsvorsprung gleitet und sich dabei sicher in der vorgesehenen Position fixiert, wobei ein Zurückrutschen bei der Montage durch den Abstandsvorsprung verhindert wird. Dies trägt ferner dazu bei, dass die Scheibe während des Beschichtungsprozesses vollständig beschichtet werden kann und ein Verkleben der Scheibe mit dem Schraubenkopf verhindert wird. Die verjüngte Innenseite der Scheibe erleichtert zudem das Aufschieben der Scheibe auf den Schraubenschaft während der Vormontage, was die Handhabung und Montage des Schraubenelements weiter vereinfacht. Insgesamt bietet diese Ausführungsform eine verbesserte Lösung für die Herausforderungen bei der Beschichtung von Schraubenelementen mit vormontierten Scheiben, indem sie eine zuverlässige und stabile Positionierung der Scheibe gewährleistet und gleichzeitig die Fertigungs- und Montageprozesse optimiert.

In einer bevorzugten Ausführungsform ist vorgesehen, dass die Scheibe entlang des Scheibeninnendurchmessers auf einer dem Gewinde zugewandten Seite mindestens zwei, bevorzugt drei oder mehr, vorstehende Scheibenvorsprünge aufweist, wobei ein innerer Hüllkreisdurchmesser der mindestens zwei Scheibenvorsprünge kleiner ist als der Durchmesser des Abstandsvorsprungs. In anderen Worten bildet sind die Scheibenvorsprünge kleine Vorsprünge bzw. vorstehende Elemente, die dem kleinsten Scheibeninnendurchmesser in Richtung der Schraubenspitze nach innen vorstehen, so dass diese sich in der vormontierten Position auf das Gewinde anlegen können und nach der Überführung der Scheibe über den Abstandsvorsprung auf diesem in dem Abschnitt aufliegen können. Es handelt sich um mindestens zwei Scheibenvorsprünge, bevorzugt drei, noch bevorzugter um mindestens vier Scheibenvorsprünge. Die Scheibenvorsprünge sind bevorzugt gleichmäßig im Umfangsrichtung über die Innenseite verteilt angeordnet.

Die Scheibenvorsprünge sind in einer Ausführungsform als Nasen ausgebildet. In anderen Worten handelt es sich um vorstehende längliche Widerstandselemente die einen quadratischen und länglichen Querschnitt aufweisen. Dabei können diese Nasen auf den dem Gewinde zugewandten Seite einen kleineren Durchmesser aufweisen, welcher bevorzugt in Richtung des Schraubenkopfes abnimmt, damit die Nasen besonders gut auf dem Gewinde aufliegen können.

In einer anderen Ausführungsform sind die Scheibenvorsprünge als Wellen. In anderen Worten sind die Scheibenvorsprünge wellenförmige vorstehende Linien. Diese Wellen sind dabei in Bezug auf den Durchmesser gleich groß, so dass insbesondere wellenförmige vorstehende Linien die Scheibenvorsprünge bilden. Die Wellen können sich dabei an der Scheibe in Umfangsrichtung erstrecken. Das Gewinde kann sich somit vorteilhaft auf den Wellentälern abstützen.

Alternativ sind die Wellen in axialer Richtung beziehungsweise horizontal entlang der Scheibe ausgebildet, so dass mehrere wellenförmige Linien entlang der Umfangsrichtung ausgebildet sind. Dabei liegt das Gewinde jeweils auf dem Anfang der Wellenform auf.

Diese vorstehenden Scheibenvorsprünge dienen dabei insbesondere als zusätzliche Sicherungselemente, die die Position der Scheibe auf dem Schraubenschaft stabilisieren. Durch die Anordnung der Scheibenvorsprünge wird verhindert zusätzlich, dass die Scheibe während des Beschichtungsprozesses oder der Handhabung des Schraubenelements ungewollt innerhalb des Abstandsbereichs verrutscht oder verklemmt. Der innere Hüllkreisdurchmesser der Scheibenvorsprünge, der kleiner ist als der Durchmesser des Abstandsvorsprungs, sorgt dafür, dass die Scheibe fest zwischen dem Abstandsvorsprung und dem Gewinde gehalten wird. Dies gewährleistet, dass die Scheibe in einer definierten Position verbleibt, was ein Verkleben der Scheibe mit dem Schraubenelement während des Beschichtungsprozesses verhindert. Ein Vorteil dieser Konstruktion ist, dass die Scheibe trotz der vorstehenden Scheibenvorsprünge leicht auf den Schraubenschaft aufgeschoben werden kann, da die Scheibenvorsprünge flexibel genug sind, um eine gewisse Dehnung zu ermöglichen, aber dennoch stark genug, um die Scheibe neben dem kleineren Scheibeninnendurchmesser noch besser in Position zu halten. Ein weiterer Vorteil ist, dass die vorstehenden Scheibenvorsprünge eine Führung entlang des Schraubenschafts ermöglichen. Dabei verhindern die Scheibenvorsprünge auch ein Verkannten der Scheibe am Schaft in den Bereichen.

In einer bevorzugten Ausführungsform ist vorgesehen, dass der Abstandsvorsprung über den gesamten Durchmesser durchgehend in Umfangsrichtung ausgebildet ist. In anderen Worten ist der Vorsprung beziehungsweise die Verdickung kontinuierlich über den gesamten Abstandsvorsprungsdurchmesser ausgebildet. Bevorzugt ist der Abstandsvorsprung dabei gleichförmig in Querschnitt in Umfangsrichtung ausgebildet. Insbesondere weist der Abstandsvorsprung keine Ausschnitte beziehungsweise Unterbrechungen auf. Dies bedeutet insbesondere, dass der Abstandsvorsprung eine kontinuierliche und gleichmäßige Erhöhung entlang des gesamten Umfangs des Schraubenschafts darstellt. Diese durchgehende Ausbildung des Abstandsvorsprungs gewährleistet eine gleichmäßige Verteilung der Kräfte und erhöht die Stabilität der vormontierten Scheibe. Darüber hinaus erleichtert die durchgehende Ausbildung des Abstandsvorsprungs die Herstellung des Schraubenelements, da keine komplexen und aufwendigen Formgebungsprozesse erforderlich sind. Die gleichmäßige Geometrie kann durch standardisierte Umform- oder Zerspanungsverfahren effizient und kostengünstig realisiert werden.

Dabei kann der Abstandsvorsprung in einer speziellen Ausführungsform auch in Richtung der Scheibe einen kleiner werdenden Durchmesser aufweisen, so dass ein einfaches und geführtes bewegen der Scheibe über den Abstandsvorsprung bei der Montage möglich ist.

In einer weiteren Ausführungsform weist der Abstandsvorsprung in axialer Richtung in einer Mitte einen größeren Durchmesser auf als an einem oberen und unteren Ende. In anderen Worten ist der Abstandsvorsprung im Querschnitt außen kreisförmig beziehungsweise bauchförmig. Auf diese Weise ist ein einfaches und geführtes Überführen bei der Montage möglich.

In einer bevorzugten Ausführungsform ist vorgesehen, dass das Schraubenelement, vorzugsweise das gesamte Schraubenelement, beschichtet ist. Diese Beschichtung kann verschiedene Formen annehmen, einschließlich, aber nicht beschränkt auf, Korrosionsschutzbeschichtungen,

Reibwertoptimierungsbeschichtungen oder elektrische Isolationsbeschichtungen. Die Beschichtung des Schraubenelements bietet mehrere Vorteile. Ein Vorteil ist der verbesserte Korrosionsschutz, der die Lebensdauer des Schraubenelements verlängert und seine Zuverlässigkeit in korrosiven Umgebungen erhöht. Ein weiterer Vorteil ist die Reduzierung der Reibung während der Montage, was zu einer gleichmäßigeren und kontrollierteren Anzugskraft führt. Dies ist besonders wichtig in Anwendungen, bei denen präzise Anzugsmomente erforderlich sind. Die Beschichtung kann auch dazu beitragen, die elektrische Leitfähigkeit zu verbessern oder zu verringern, je nach den spezifischen Anforderungen der Anwendung. Die Beschichtung des gesamten Schraubenelements stellt sicher, dass alle Teile des Schraubenelements, einschließlich des Schraubenkopfs, des Schraubenschafts, der Scheibe und des Gewindes, gleichmäßig geschützt und optimiert sind. Dies trägt zur Gesamtleistung und Langlebigkeit des Schraubenelements bei und macht es zu einer vielseitigen Lösung für eine Vielzahl von Anwendungen.

Ferner betrifft die Erfindung ein Verfahren zur Herstellung eines Schraubenelements, insbesondere des erfindungsgemäßen Schraubenelementes, mit einer vormontierter Scheibe mit zumindest den folgenden Schritten, insbesondere in der folgenden Reihenfolge a) Bereitstellung einer Schraube mit einem Schraubenkopf und einem Schraubenschaft, b) Erzeugung eines Abstandsvorsprungs am Schraubenschaft mit einem Durchmesser, c) Aufbringen der Scheibe mit einem Scheibeninnendurchmesser auf den Schraubenschaft, d) Erzeugung, insbesondere durch Aufwalzen, eines Gewindes auf einer dem Schraubenkopf abgewandten Seite des Abstandsvorsprungs am Schraubenschaft mit einem Außendurchmesser d), wobei der Schraubeninnendurchmesser der Scheibe kleiner ist als der Durchmesser des Abstandsvorsprungs und kleiner ist als der Außendurchmessers des Gewindes, so dass die Scheibe zwischen dem Abstandsvorsprung und dem Gewinde in einem Abstandsbereich verliersicher gehalten wird. In anderen Worten wird nach der eine Erzeugung eines Abstandsvorsprungs die Scheibe aufgebracht und durch die Erzeugung des Gewindes in dem Abstandsbereich gehalten.

Zunächst wird eine Schraube mit einem Schraubenkopf und einem Schraubenschaft bereitgestellt. Anschließend wird ein Abstandsvorsprung am Schraubenschaft erzeugt, der einen bestimmten Durchmesser aufweist. Danach wird die Scheibe mit einem definierten Scheibeninnendurchmesser auf den Schraubenschaft aufgebracht. Schließlich wird auf der dem Schraubenkopf abgewandten Seite des Abstandsvorsprungs ein Gewinde erzeugt, wobei der Außendurchmesser des Gewindes größer ist als der Scheibeninnendurchmesser. Diese Schritte gewährleisten, dass die Scheibe zwischen dem Abstandsvorsprung und dem Gewinde in einem Abstandsbereich verliersicher gehalten wird. Auf diese Weise kann vorteilhaft eine Schraube mit vormontierter Scheibe bereitgestellt werden, wobei durch den Abstandsvorsprung in einem bestimmten Abstand die Scheibe vom Schraubenkopf vorteilhaft beabstandet ist. Darüber hinaus wird durch die spezifische Anordnung der Scheibe zwischen dem Abstandsvorsprung und dem Gewinde eine verliersichere Montage erreicht, die die Handhabung und den Einsatz des Schraubenelements in verschiedenen Anwendungen erleichtert. Die Verwendung von Umformungstechniken wie Pressen oder Walzen zur Erzeugung des Abstandsvorsprungs und des Gewindes trägt ebenfalls zur Robustheit und Zuverlässigkeit des Schraubenelements bei. Insgesamt bietet dieses Herstellungsverfahren eine innovative Lösung für die Herausforderungen bei der Beschichtung und Montage von Schraubenelementen mit vormontierten Scheiben.

In einer bevorzugten Ausführungsform ist vorgesehen, dass das Verfahren den zusätzlichen Schritt aufweist: e) Beschichten des Schraubenelements mit vormontierter Scheibe, wobei die Scheibe in einem Abstand zum Schraubenkopf in dem Abstandsbereich angeordnet ist. In anderen Worten wird das gesamte Schraubenelement beschichtet, wobei die Scheibe in einem bestimmten und durch den Abstandsvorsprung vorgegebenen Abstand zum Schraubenkopf gehalten wird. Dieser zusätzliche Schritt stellt sicher, dass die Scheibe während des Beschichtungsprozesses in einer definierten Position gehalten wird, wodurch ein Verkleben der Scheibe mit dem Schraubenelement verhindert wird. Dies ist besonders vorteilhaft, da es die technischen Eigenschaften des beschichteten Schraubenelements verbessert, indem es die Streuung der Reibwerte und der elektrischen Leitfähigkeit minimiert und den Korrosionsschutz optimiert. Der Abstandsvorsprung am Schraubenschaft sorgt dafür, dass die Scheibe in einem festen Abstand zum Schraubenkopf gehalten wird, was eine gleichmäßige Beschichtung des Schraubenelements ermöglicht. Die Scheibe bleibt in ihrer Position zwischen dem Abstandsvorsprung und dem Gewinde verliersicher fixiert, was die Handhabung und den Beschichtungsprozess erheblich erleichtert. Diese Methode eliminiert die Notwendigkeit für zusätzliche Abstandshalter oder teure Sonderprozesse, die bisher erforderlich waren, um die Scheibe in Position zu halten. Zudem entfällt der zusätzliche Arbeitsgang, in dem die Scheibe nach der Beschichtung montiert werden müsste, was die Effizienz des gesamten Herstellungsprozesses erhöht. Die beschichtete Schraube mit der vormontierten Scheibe kann direkt in der vorgesehenen Anwendung eingesetzt werden, ohne dass weitere Montageschritte erforderlich sind. Dies führt zu einer Reduzierung der Produktionskosten und einer Verbesserung der Produktqualität. Das Verfahren bietet somit eine kosteneffiziente und technisch verbesserte Lösung für die Beschichtung von Schraubenelementen mit vormontierten Scheiben.

In einer bevorzugten Ausführungsform des Verfahrens ist vorgesehen, dass die Erzeugung des Abstandsvorsprungs am Schraubenschaft durch Umformung, vorzugsweise durch Pressen oder Walzen, oder durch Zerspanung erfolgt. Beim Pressen oder Walzen handelt es sich um Umformverfahren, bei denen das Material des Schraubenschafts plastisch verformt wird, um den Abstandsvorsprung zu erzeugen. Diese Verfahren sind besonders vorteilhaft, da sie eine hohe Maßgenauigkeit und Oberflächenqualität gewährleisten und gleichzeitig die mechanischen Eigenschaften des Materials verbessern können.

Durch das Pressen oder Walzen wird der Abstandsvorsprung nahtlos in den Schraubenschaft integriert, was zu einer erhöhten Festigkeit und Stabilität der Verbindung führt.

Alternativ kann der Abstandsvorsprung durch Zerspanung erzeugt werden, ein Verfahren, bei dem Material durch Fräsen, Drehen oder Bohren entfernt wird, um die gewünschte Geometrie zu erreichen. Die Zerspanung bietet den Vorteil, dass komplexe Formen und präzise Toleranzen erreicht werden können, was besonders bei speziellen Anforderungen an die Geometrie des Abstandsvorsprungs von Bedeutung ist. Die Wahl des Herstellungsverfahrens hängt von den spezifischen Anforderungen der Anwendung ab, wobei jedes Verfahren seine eigenen Vorteile bietet. Der Abstandsvorsprung spielt eine zentrale Rolle bei der Positionierung der Scheibe zwischen dem Abstandsvorsprung und dem Gewinde. Durch die präzise Herstellung des Abstandsvorsprungs wird sichergestellt, dass die Scheibe verliersicher in einem definierten Abstand zum Schraubenkopf gehalten wird. Dies verhindert ein Verkleben der Scheibe mit dem Schraubenkopf während des Beschichtungsprozesses und ermöglicht eine gleichmäßige Beschichtung des Schraubenelements.

In einer bevorzugten Ausführungsform ist vorgesehen, dass der Durchmesser des Abstandsvorsprungs größer ist als ein Vorwalzdurchmesser des Schraubenelements vor dem Erzeugen des Gewindes, so dass die Scheibe in einem bestimmten Schritt auf den Schraubenschaft aufschiebbar ist. Der Abstandsvorsprung am Schraubenschaft hat einen größeren Durchmesser als der ursprüngliche Durchmesser des Schraubenelements vor dem Gewindewalzen. Dies ermöglicht es, die Scheibe vor dem Gewindewalzen auf den Schraubenschaft aufzuschieben.

Ferner betrifft die Erfindung ein Verfahren zur Beschichtung eines Schraubenelements mit zumindest den folgenden Schritten A) Bereitstellung des erfindungsgemäßen Schraubenelements, B) Beschichtung des Schraubenelements, bevorzugt durch Trommelbeschichtung, wobei bei der Beschichtung in Schritt B) die vormontierte Scheibe von dem Abstandsvorsprung in dem Abstandsbereich beabstandet von dem Schraubenkopf gehalten wird. In anderen Worten wird das zuvor beschriebene erfindungsgemäße Schraubenelement bereitgestellt und beschichtet, wobei die Scheibe in dem Abstandsbereich beweglich gehalten wird. Der wesentliche Vorteil der Erfindung ist, dass die Scheibe in einer bestimmten Position gehalten wird, um beim Beschichten des Schraubenelements ein Verkleben zu verhindern und das Schraubenelement zu beschichten. Durch die spezifische Anordnung der Scheibe zwischen dem Abstandsvorsprung und dem Gewinde wird sichergestellt, dass die Scheibe während des Beschichtungsprozesses nicht in Kontakt mit dem Schraubenkopf kommt, was ein Verkleben der Scheibe mit dem Schraubenkopf verhindert und somit die technischen Eigenschaften des Schraubenelements, wie Reibwerte, elektrische Leitfähigkeit und Korrosionsschutz, nicht negativ beeinflusst werden. Dies ermöglicht eine gleichmäßige und qualitativ hochwertige Beschichtung des Schraubenelements, ohne dass zusätzliche Abstandshalter oder teure Sonderprozesse erforderlich sind. Die Trommelbeschichtung als bevorzugtes Beschichtungsverfahren bietet den Vorteil einer effizienten und kostengünstigen Beschichtung, da mehrere Schraubenelemente gleichzeitig beschichtet werden können. Die Erfindung trägt somit zur Verbesserung der Produktionsprozesse bei und reduziert die Kosten und den Aufwand für die Beschichtung von Schraubenelementen mit vormontierten Scheiben erheblich.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen schematisch in:
Figur 1 eine Ausführungsform eines Schraubenelements mit einem Schraubenschaft, einem Schraubenkopf, einem Abstandsvorsprung, einem Gewinde und einer vormontierten Scheibe.
Figur 2 eine Ausführungsform eines Schraubenelements, das in ein Werkstück eingeschraubt ist, wobei die Scheibe in einem Abstand zum Schraubenkopf gehalten wird.
Figur 3 das montierte Schraubenelement gemäß Figur 2,
Figur 4 eine Ausführungsform einer Scheibe mit einem inneren Durchmesser D2 und einem äußeren Durchmesser Ds.
Figur 5 eine zweite Ausführungsform einer Scheibe mit einem inneren Durchmesser D2 über eine Höhe H1, einem zweiten Scheibeninnendurchmesser D3, einer Fase.
Figur 6 eine Ausführungsform einer Scheibe im Detail mit einem inneren Durchmesser D2 und darauf ausgebildeten Scheibenvorsprünge mit ein Hüllkreisdurchmesser.
Figur 7 die Ausführungsform gemäß Figur 6 in einer weiteren Ansicht.
Figur 8 eine Ausführungsform einer Scheibe mit mindestens zwei vorstehenden Scheibenvorsprünge auf der Innenseite.

In den Figuren sind gleiche Bauteile oder Bauteile mit der gleichen Funktion mit den gleichen Bezugszeichen gekennzeichnet. Alle Skizzen können zu Darstellungszwecken überzogen gezeichnet sein, somit müssen die Figuren nicht die Proportionen der tatsächlichen Ausführungsformen aufweisen.

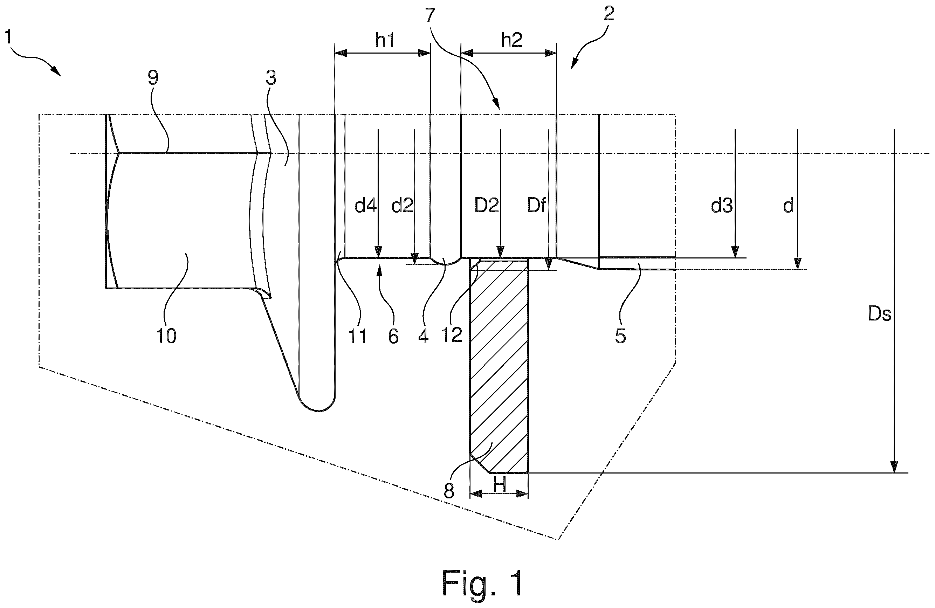

Figur 1 zeigt eine detaillierte Zeichnung eines Schraubenelements 1 mit einer vormontierten Scheibe 8. Das Schraubenelement 1 umfasst einen Schraubenschaft 2, der sich von einem Schraubenkopf 3 bis zu einem Gewinde 5 erstreckt. Das Schraubenelement 1 weist eine Mittelachse 9 auf. Der Schraubenkopf 3 weist dabei eine Anlegefläche für die Scheibe 8 auf der dem Schraubenschaft 2 zugewandten Seite auf. Der Schraubenkopf 3 ist mit einem Antriebselement 10 versehen, das zur Drehmomentübertragung dient.

Ferner ist auf der dem Abstandsvorsprung 4 zugewandten Seite des Schraubenkopfes 3 eine Kopfanlegefase 11 korrespondierend zu der Fase 12 der Scheibe 8 im Abschnitt 6 ausgebildet, die ein vorteilhaftes vollständiges Anlegen der Scheibe 8 im montierten Zustand ermöglicht.

Am Schraubenschaft 2 befindet sich ein Abstandsvorsprung 4 mit einem Durchmesser d2, der vom Schraubenkopf 3 beabstandet ist. Der Abstandsvorsprung 4 bildet zusammen mit dem Schraubenschaft 2 einen Abschnitt 6 mit einer Höhe h1, dessen Durchmesser d4 kleiner ist als der Durchmesser d2 des Abstandsvorsprungs 4 und kleiner als der Scheibeninnendurchmesser D2. Zwischen dem Abstandsvorsprung 4 und dem Gewinde 5 ist ein Abstandsbereich 7 mit einer Höhe h2 angeordnet. Der Abstandsbereich 7 hat einen Durchmesser d3, der kleiner ist als der Durchmesser d2 des Abstandsvorsprungs 4.

Die Scheibe 8 ist auf dem Schraubenschaft 2 vormontiert und befindet sich zwischen dem Abstandsvorsprung 4 und dem Gewinde 5 in dem Abstandsbereich 7. Die Scheibe 8 hat den Scheibeninnendurchmesser D2, der kleiner ist als der Durchmesser d2 des Abstandsvorsprungs 4 und kleiner als der Außendurchmesser d des Gewindes 5. Dadurch wird die Scheibe 8 verliersicher in dem Abstandsbereich 7 gehalten und kann innerhalb diesen bewegt werden, wodurch eine vorteilhafte Beschichtung ermöglicht wird.

Die Scheibe 8 weist eine Scheibenhöhe H auf und ist optional mit einer Scheibenfase 12 mit einem Fasendurchmesser Df versehen, die das Aufschieben der Scheibe 8 über den Abstandsvorsprung 4 erleichtert. Der Fasendurchmesser Df der Fase 12 ist größer als der Durchmesser d2 des Abstandsvorsprungs 4 und größer als der Scheibeninnendurchmesser D2. Auf diese Weise kann die Fase 12 vorteilhaft ein Clipsen der Scheibe über den Abstandsvorsprung führen und vereinfachen.

Die Scheibe 8 weist dabei bevorzugt einen größeren Außendurchmesser Ds auf als die ein Außendurchmesser des Schraubenkopfes 3, um ein Loch im Werkstück vorteilhaft abdichten zu können und eine breitere und kontrollierte Auflage für den Schraubenkopf an dem Vorspannwerkstück 13 bereitzustellen.

Der Abschnitt 6 hat eine Höhe h1, die größer ist als die Scheibenhöhe H, wodurch sichergestellt wird, dass die Scheibe 8 frei beweglich bei der Montage ist und sich geführt an den Schraubenkopf 3 anlegen kann. Die Höhe h1 des Abschnitts 6 ist mindestens so groß wie die Höhe h2 des Abstandsbereichs 7. Das Gewinde 5 befindet sich an der dem Schraubenkopf 3 abgewandten Seite des Abstandsvorsprungs 4 und hat einen Außendurchmesser d, der größer ist als der Scheibeninnendurchmesser D2. Auf diese Weise wird ein Abrutschen der Scheibe 8 verhindert und ein gleichmäßiges Beschichten entlang des Gewindes ermöglicht. Zusätzlich weist das Gewinde 5 vorher entlang des Schraubenschafts 2 einen Vorwalzdurchmesser d3 auf, der kleiner ist als der Durchmesser d2 des Abstandsvorsprungs 4, um das Aufschieben der Scheibe 8 bis zum Abstandsvorsprung vor dem Gewindewalzen zu ermöglichen.

Die Figur veranschaulicht die geometrischen Beziehungen und Abmessungen der verschiedenen Komponenten des Schraubenelements 1, einschließlich der Position und der Abmessungen der Scheibe 8 relativ zum Schraubenschaft 2, dem Abstandsvorsprung 4, dem Schraubenkopf 3 sowie dem Gewinde 5.

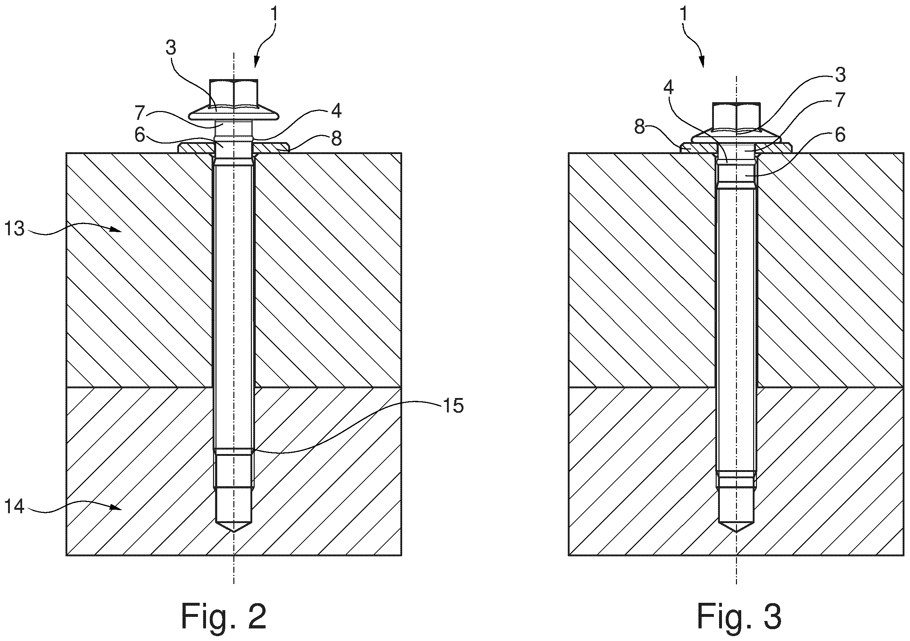

Figur 2 und Figur 3 zeigen jeweils ein Schraubenelement 1 bei der Montage. In Figur 2 ist das Schraubenelement 1 in einer ersten Position dargestellt, bei der die Scheibe 8 sich in einem Abstand zum Schraubenkopf 3 befindet. In dieser Montagesituation kann vorteilhaft eine weitere Beschichtung oder Lackierung aufgebracht werden. Der Abstandsvorsprung 4 ist vom Schraubenkopf 3 beabstandet und weist einen größeren Durchmesser d2 auf als der Innendurchmesser D2 der Scheibe 8, wodurch die Scheibe 8 verliersicher im Abstandsbereich 7 gehalten wird. Der Schraubenschaft 2 erstreckt sich durch das Vorspannwerkstück 13 sowie das Werkstück 14, wobei das Gewinde 5 in das Muttergewinde 15 eingreift. Der Abschnitt 6 sowie der Abstandsvorsprung 4 ist dabei vollständig oberhalb des Vorspannwerkstücks 13 angeordnet. Die Scheibe 8 kann somit an der Unterseite des Abstandsvorsprungs 4 angelegt werden, wobei vorteilhaft ein Wiederstand beim Anziehen erzielt wird, so dass das Anziehen in dieser Position nur durch ein höheres Anziehmoment durchführbar ist. Auf dies Weise ist diese Position vorteilhaft durch den Abstand des Abstandsvorsprungs 4 vom Schraubenkopf 3 beziehungsweise durch die Höhe h1 des Abschnitts 7 vorgebbar.

In Figur 3 ist das Schraubenelement 1 in einer zweiten Position dargestellt, bei der die Scheibe 8 über den Abstandsvorsprung 4 geschoben beziehungsweise geclipst wurde und gegen die Scheibenanlegefläche des Schraubenkopfes 3 angelegt ist. Dies wird durch das Anziehen des Schraubenelements 1 bei der Montage erreicht. Der Abstandsbereich 7 hat eine Abstandsbereichshöhe h2, die in axialer Richtung größer ist als die Scheibenhöhe H, wobei die Scheibe 8 in dieser montierten Position durch das Vorspannwerkstück 13 am oberen Ende des Abschnitts 6 gegen den Schraubenkopf gepresst wird. Das Vorspannwerkstück wird somit gegen das Werkstück 14 durch das Schraubenelement 1 gespannt beziehungsweise mit diesem verbunden.

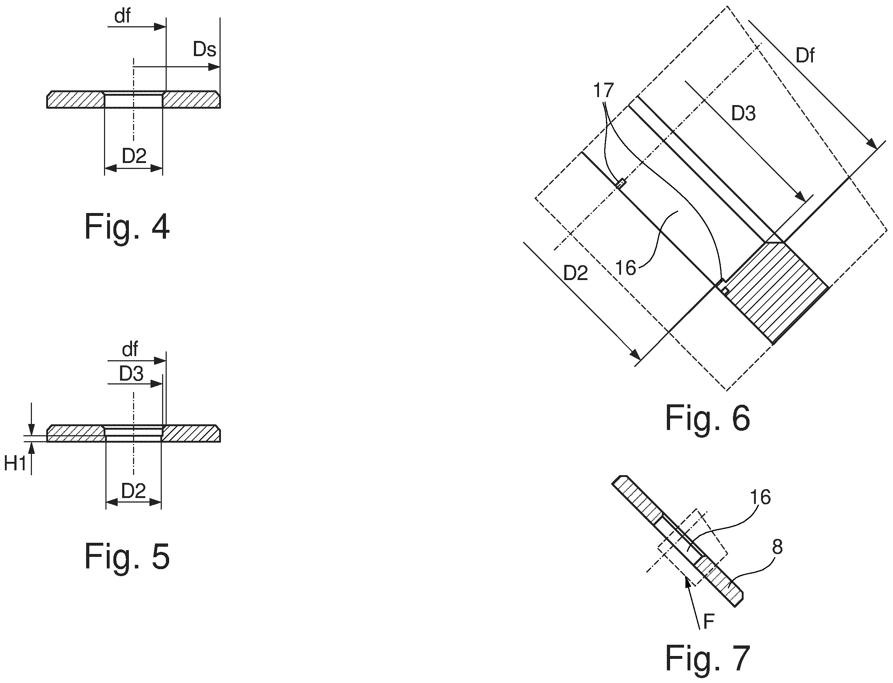

Figur 4 zeigt eine erste Ausführungsform der Scheibe 8 mit einem Innendurchmesser D2 und einem Außendurchmesser Ds. Die Scheibe weist eine Scheibenfase 12 mit einem Fasendurchmesser df auf, die sich über die Scheibeninnenseite in Umfangsrichtung erstreckt.

Die Scheibe 8 verjüngt sich somit in axialer Richtung hin zum Abstandsvorsprungs 4, so dass die Montage vereinfacht wird. Bevorzugt weist der Schraubenkopf 3 eine korrespondierende Kopfanlegefase 11 auf.

Figur 5 illustriert eine zweite Ausführungsform der Scheibe 8. Diese Scheibe 8 hat ebenfalls einen Innendurchmesser D2, wobei dieser in axialer Richtung eine Höhe H1 aufweist. Im Anschluss weist die Scheibe 8 einen weiteren größeren zweiten Scheibeninnendurchmesser D3 auf, welcher die Scheibe 8 nach oben verjüngt. Ferner weist die Scheibe 8 am oberen Ende eine Scheibenfase 12 mit einem Scheibenfasendurchmesser df auf. Der zweite Scheibeninnendurchmesser D3 ist größer als der Innendurchmesser D2, so dass die Scheibe 8 einfach montierbar ist. Bevorzugt ist in dieser Ausführungsform die Höhe des Scheibeninnendurchmessers H1 in axialer Richtung halb so groß, bevorzugt ein Drittel so groß, bevorzugt ein Viertel so groß oder kleiner als die Scheiben Höhe H, so dass eine besonders einfache Montage ermöglicht wird.

Figur 6 zeigt eine Detailansicht einer dritten Ausführungsform einer Scheibe 8 mit mehreren Scheibenvorsprünge 17, die als Nasen ausgebildet sind. Der Innendurchmesser der Scheibe 8 ist mit D3 gekennzeichnet, während der Außendurchmesser der Nasen 17 mit D2 gekennzeichnet ist. Zusätzlich ist eine optionale Scheibenfase 12 mit Scheibenfasendurchmesser df an der oberen Seite der Scheibe 8 ausgebildet. Diese Nasen 17 sind so angeordnet, dass sie eine Materialverdrängung nach außen ermöglichen. Die Nase 17 sind dabei kleine Vorsprünge, zum Beispiel Wellen oder Noppen, die leicht beim Anziehen des Schraubenelementes 1 überwunden werden können und dem Scheibeninnendurchmesser vorstehen. Auf diese Weise ist ein geführtes und einfaches Gleiten entlang des Schraubenschaftes 2 möglich. Ferner wird eine zusätzlicher Schutz vor dem ungewünschten Überwinden der Scheibe 8 über den Abstandsvorsprung 4 bei der Beschichtung bereitgestellt.

Figur 7 veranschaulicht eine Seitenansicht der dritten Ausführungsform der 8 gemäß Figur 6 mit Nasen 17 (nicht in Figur 7 abgebildet). Die Nasen sind so gestaltet, wie der Bereich F im Detail in der Figur 6 zeigt. Die vormontierte Scheibe 8 kann auf der Unterseite am Schraubenschaft 2 mit den Nasen 17 auf dem Gewinde 5 aufliegen und auf der Oberseite im Bereich der Scheibenfase 12 gegen den Abstandsvorsprung anliegen.

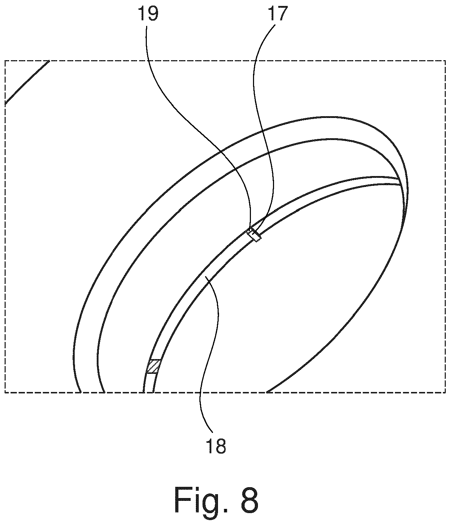

Figur 8 zeigt eine schematische Darstellung einer Scheibe 8 mit einer speziellen Ausführungsform der Nase 17, die entlang einer dem Scheibeninnendurchmesser D2 zurückgesetzten Naseninnenfase 18 angeordnet sind. Die Nasen 17 haben einen inneren Hüllkreisdurchmesser, der kleiner ist als der Durchmesser des Abstandsvorsprungs 4, wodurch die Scheibe 8 in einem definierten Mindestabstand zum Schraubenkopf im vormontierten Zustand gehalten wird und nach einem Clipsen nicht zurück über den Abstandsvorsprung zurückrutschen kann. Die Scheibe 19 weist eine innere Verjüngung in Form der Naseninnenfase 18 auf, auf welcher die Nasen 17 gleichmäßig in Umfangsrichtung angeordnet sind. Diese Nasen 17 weisen dabei jeweils eine Nasenoberseite auf und ermöglicht es, die Scheibe 8 mit minimalem Kraftaufwand über den Abstandsvorsprung 4 zu schieben, während sie gleichzeitig sicher in Position gehalten wird.

Alternativ können die Scheibenvorsprünge 17 als Wellen ausgebildet sein, welche entweder im Wesentlichen in Umfangsrichtung oder axialer Richtung angeordnet sind. Durch die Wellenform kann insbesondere die Montage erleichtert werden und ein Verkanten verhindert werden.

Die dargestellten Scheiben 8 in den Figuren sind so konzipiert, dass sie während des Beschichtungsprozesses in einem definierten Abstand zum Schraubenkopf 3 gehalten werden, um ein Verkleben der Scheibe 8 mit dem Schraubenkopf 3 und dem Schraubenschaft 2 zu verhindern. Dies gewährleistet gleichbleibende technische Eigenschaften wie Reibwerte, elektrische Leitfähigkeit und Korrosionsschutz.

### Bezugszeichenliste

- 1: Schraubenelement, Schraube
- 2: Schraubenschaft
- 3: Schraubenkopf
- 4: Abstandsvorsprung, Abstandsgeometrie
- 5: Gewinde
- 6: Abschnitt, Beschichtungsabschnitt
- 7: Abstandsbereich
- 8: Scheibe
- 9: Schraubenachse, Mittelachse
- 10: Antriebsmittel, Anziehkontur
- 11: Kopfanlegefase
- 12: Scheibenfase
- 13: Vorspannwerkstück, Bauteile
- 14: Werkstück, Bauteile
- 15: Mutterngewinde
- 16: Scheibeninnenseite
- 17: Nasen, Scheibenvorsprünge, Wellen
- 18: Naseninnenfase
- 19: Nasenoberseite
- h1: Höhe (Abschnitt)
- h2: Abstandsbereichshöhe, Höhe des Abstandsbereichs
- d: Außendurchmesser, Gewindeaußendruchmesser
- d2: Durchmesser, Durchmesser Abstandsvorsprung
- d3: Abstandsbereichdurchmesser, Durchmesser des Abstandsbereichs, Vorwalzdurchmesser
- d4: Abschnittsdurchmesser, Durchmesser des Beschichtungsabschnitts
- H: Scheibenhöhe, Scheibendicke
- H1: Höhe des Scheibeninnendurchmessers
- Ds: Außendurchmesser Scheibe
- D2: Scheibeninnendurchmesser, Innendurchmesser der Scheibe
- D3: Zweiter Scheibeninnendurchmesser, Verjüngungsdurchmesser
- Df: Fasendurchmesser

## Patentansprüche

1. Schraubenelement (1) zumindest aufweisend:
i) einen Schraubenschaft (2) mit einem Schraubenkopf (3),
ii) einen vom Schraubenkopf beabstandeten Abstandsvorsprung (4) mit einem Durchmesser (d2) am Schraubenschaft (2), und
iii) ein Gewinde (5) mit einem Außendurchmesser (d) an einer dem Schraubenkopf (3) abgewandten Seite des Abstandsvorsprungs (4), und
iv) eine auf dem Schraubenschaft (2) vormontierte und zwischen dem Abstandsvorsprung (4) und dem Gewinde (5) angeordnete Scheibe (8) mit einem Scheibeninnendurchmesser (D2),
wobei der Scheibeninnendurchmesser (D2) der Scheibe (8) kleiner ist als der Durchmesser (d2) des Abstandsvorsprungs (4) und kleiner ist als der Außendurchmessers (d) des Gewindes (5), so dass die Scheibe (8) zwischen dem Abstandsvorsprung (4) und dem Gewinde (5) in einem Abstandsbereich (7) entlang des Schraubenschafts (2) verliersicher in einem Abstand zum Schraubenkopf (3) angeordnet ist.

2. Schraubenelement (1) nach Anspruch 1, durch ein Anziehen des Schraubenelements (1) bei der Montage die Scheibe (8) über den Abstandsvorsprung (4) bewegbar und gegen eine Scheibenanlegefläche des Schraubenkopfes (3) anlegbar ist.

3. Schraubenelement (1) nach wenigstens einem der vorhergehenden Ansprüche, wobei zwischen der Scheibenanlegefläche des Schraubenkopfes (3) und dem Abstandsvorsprung (4) ein den Abstand vorgebender Abschnitt (6) entlang des Schraubenschaftes (2) mit einer Höhe (h1) ausgebildet ist, wobei der Abschnitt (6) in axialer Richtung größer ist als eine Scheibenhöhe (H) der Scheibe (8).

4. Schraubenelement (1) nach wenigstens einem der vorhergehenden Ansprüche, wobei eine Abstandsbereichshöhe (h2) des Abstandsbereichs (7) in axialer Richtung größer, vorzugsweise mindestens 1,2 mal größer, noch bevorzugter mindestens 1,5 mal größer, ist als die Scheibenhöhe (H), so dass die Scheibe (8) in dem Abstandsbereich entlang des Schraubenschafts (2) frei beweglich haltbar ist.

5. Schraubenelement (1) nach wenigstens einem der vorhergehenden Ansprüche, wobei die Höhe (h1) mindestens so groß ist wie die Abstandsbereichshöhe (h2).

6. Schraubenelement (1) nach wenigstens einem der vorhergehenden Ansprüche, wobei ein Abstandsbereichsdurchmesser (d3) des Abstandsbereichs (7) und ein Abschnittsdurchmesser (d4) des Abschnitts (6) gleich groß sind.

7. Schraubenelement (1) nach wenigstens einem der vorhergehenden Ansprüche, wobei die Scheibe (8) auf einer Innenseite (16) verjüngend hin zum Abstandsvorsprung (5) ausgebildet ist.

8. Schraubenelement (1) nach wenigstens einem der vorhergehenden Ansprüche, wobei die Scheibe (8) entlang des Scheibeninnendurchmessers auf einer dem Gewinde (5) zugewandten Seite mindestens zwei, bevorzugt drei oder mehr, vorstehende Scheibenvorsprünge (17) aufweist, wobei ein innerer Hüllkreisdurchmesser der mindestens zwei Scheibenvorsprünge (17) kleiner ist als der Durchmesser (d2) des Abstandsvorsprungs (4).

9. Schraubenelement (1) nach wenigstens einem der vorhergehenden Ansprüche, wobei der Abstandsvorsprung (4) über den gesamten Durchmesser (d2) durchgehend in Umfangsrichtung ausgebildet ist.

10. Schraubenelement (1) nach wenigstens einem der vorhergehenden Ansprüche, wobei das Schraubenelement (1), vorzugsweise das gesamte Schraubenelement, beschichtet ist.

11. Verfahren zur Herstellung eines Schraubenelements, insbesondere eines Schraubenelements (1) nach wenigstens einem der Ansprüche 1 - 10, mit einer vormontierter Scheibe (8) mit zumindest den folgenden Schritten, insbesondere in der folgenden Reihenfolge:
a) Bereitstellung einer Schraube mit einem Schraubenkopf (3) und einem Schraubenschaft (2),
b) Erzeugung eines Abstandsvorsprungs (4) am Schraubenschaft (1) mit einem Durchmesser (d2),
c) Aufbringen der Scheibe (8) mit einem Scheibeninnendurchmesser (D2) auf den Schraubenschaft (2),
d) Erzeugung, insbesondere durch Aufwalzen, eines Gewindes (5) auf einer dem Schraubenkopf (3) abgewandten Seite des Abstandsvorsprungs (4) am Schraubenschaft (2) mit einem Außendurchmesser (d),
wobei der Schraubeninnendurchmesser (D2) der Scheibe (8) kleiner ist als der Durchmesser (d2) des Abstandsvorsprungs (4) und kleiner ist als der Außendurchmessers (d) des Gewindes (5), so dass die Scheibe (8) zwischen dem Abstandsvorsprung (4) und dem Gewinde (5) in einem Abstandsbereich (7) verliersicher gehalten wird.

12. Verfahren nach Anspruch 11, wobei das Verfahren den zusätzlichen Schritt aufweist:
e) Beschichten des Schraubenelements (1) mit vormontierter Scheibe (8), wobei die Scheibe (8) in einem Abstand zum Schraubenkopf (3) in dem Abstandsbereich (7) angeordnet ist.

13. Verfahren nach wenigstens Anspruch 11 oder 12, wobei die Erzeugung des Abstandsvorsprungs (4) in Schritt b) durch Umformung, vorzugsweise durch Pressen oder Walzen, oder durch Zerspanung erfolgt.

14. Verfahren nach wenigstens einem der vorhergehenden Ansprüche 11 bis 13, wobei der Durchmesser (d2) des Abstandsvorsprungs (4) größer ist als ein Vorwalzdurchmesser (d3) des Schraubenelements (1) vor dem Erzeugen des Gewindes (5) in Schritt d), so dass die Scheibe (8) in Schritt c) auf den Schraubenschaft (2) aufschiebbar ist.

15. Verfahren zur Beschichtung eines Schraubenelements mit zumindest den folgenden Schritten:
A) Bereitstellung eines Schraubenelements (1) nach zumindest einem der Ansprüche 1 - 9,
B) Beschichtung des Schraubenelements (1), bevorzugt durch Trommelbeschichtung,
wobei bei der Beschichtung in Schritt B) die vormontierte Scheibe (8) von dem Abstandsvorsprung (4) in dem Abstandsbereich (7) beabstandet von dem Schraubenkopf (3) gehalten wird.
